# EUROPEAN PATENT SPECIFICATION

(11) **EP 2 691 289 B1**
(45) Date of publication and mention of the grant of the patent: **24.12.2014**
(21) Application number: 11784796.2
(22) Date of filing: 16.09.2011
(51) Int. Cl.: B63B 1/10, B63B 35/44

(54) **MODULAR SEMI-SUBMERSIBLE STRUCTURE AND METHOD FOR MAKING SUCH STRUCTURE**
MODULARE HALBTAUCHFÄHIGE STRUKTUR UND VERFAHREN ZUR HERSTELLUNG EINER DERARTIGEN STRUKTUR
STRUCTURE MODULAIRE SEMI-SUBMERSIBLE ET PROCÉDÉ DE FABRICATION D'UNE TELLE STRUCTURE

(43) Date of publication of application: 05.02.2014
(73) Proprietor: Fincantieri S.p.A., 34121 Trieste (IT)
(72) Inventor: GONAN, Roberto, I-34121 Trieste (IT)
(74) Representative: Zanettin, Gianluigi
(86) International application number: PCT/IT2011/000323
(87) International publication number: WO 2013/038433

(56) References cited:
- WO-A1-2005/095201
- US-A1- 2004 040 487

## Description

### FIELD OF APPLICATION

The present invention relates to a modular semi-submersible structure and method for making such structure.

The modular semi-submersible structure may be used to realise platforms able to board tourism, residential, commercial, industrial or military structures in the vicinity of coasts or in lake or river waters as well as unprotected, off-coast areas.

### BACKGROUND OF THE INVENTION

The lack of territory adjacent to marine or lakeside locations of significant environmental and commercial value has led to a search for floating solutions operating near coasts or banks, often in unprotected areas or distant from ports and landing places. One example is given by the constructions in the vicinity of river mouths, ports or simply commercial berths having a logistic, energetic or even tourism function.

Known solutions envisage floating pontoons which can be used in harbour environments and protected waters. Such solutions of the known type are however limited in that they are solutions with a limited utilisable surface, entail use in protected harbour waters and do not always comply with increasingly strict coast and harbour regulations for human welfare and safeguarding of the marine environment.

Document WO 2005/095201 is considered as the closest prior art and discloses a modular semi-submersible structure with two modules which comprise a deck, a hull and columns and which are interconnected of the deck level.

### PRESENTATION OF THE INVENTION

The purpose of the present invention is to make available a modular semi-submersible structure, which offers a utilisable surface easily expandable in relation to the space and capacity project requirements which may evolve and change over time.

A further purpose of the present invention is to make available a modular semi-submersible structure which can be placed in the marine environment with the least possible impact and which is able to withstand adverse sea conditions in unprotected areas.

A further purpose of the present invention is to make available a modular semi-submersible structure, which ensures a high degree of comfort and safety on board even in adverse sea conditions in unprotected areas.

A further purpose of the present invention is to make available a modular semi-submersible structure, which can be easily and simply constructed directly in the final mooring area.

A further purpose of the present invention is to make available a modular semi-submersible structure, which is simple and economical to construct.

### BRIEF DESCRIPTION OF THE DRAWINGS

The technical characteristics of the invention, according to the aforesaid purposes, can be seen clearly from the contents of the following claims and the advantages of the same will be more clearly comprehensible from the detailed description below, made with reference to the attached drawings, showing one or more embodiments by way of non-limiting examples, wherein:
- figure 1 shows a perspective view from above of a semi-submersible module forming the structure according to the invention, according to a preferred embodiment;
- figure 2 shows a perspective view from below of the module shown in figure 1;
- figure 3 shows a perspective view from above of a modular semi-submersible structure according to a preferred embodiment, made with three modules identical to that shown in Figure 1;
- figure 4 shows a perspective view of the structure shown in figure 3;
- Figures 5 and 7 show two sketches, respectively a perspective and ground view, of a semi-submersible structure according to the invention with a touristic structure on board;
- Figures 6 and 8 show two sketches, respectively a perspective and ground view, of the structure illustrated in Figures 5 and 7 with an extended utilisable surface to expand the touristic structure;
- figure 9 shows a side view partially in cross section of the module shown in Figure 1, anchored to the seabed by means of catenaries;
- figures 10 and 11 show two side views partially in cross section of the module shown in Figure 1, shown in two different floating configurations and respectively figure 10 with the columns partially submerged to stand up to adverse sea conditions and figure 11 with the columns completely submerged in favourable sea and weather conditions;
- Figure 12 shows a schematic ground view of the module shown in Figure 1, at a section plane passing through the hull of the module itself; and
- figure 13 shows a ground view from above of the structure shown in Figure 3, where the grid connection structure between the decks of the three modules is visible.

### DETAILED DESCRIPTION

With reference to the appended drawings reference numeral 1 globally denotes the modular semi-submersible structure according to the present invention.

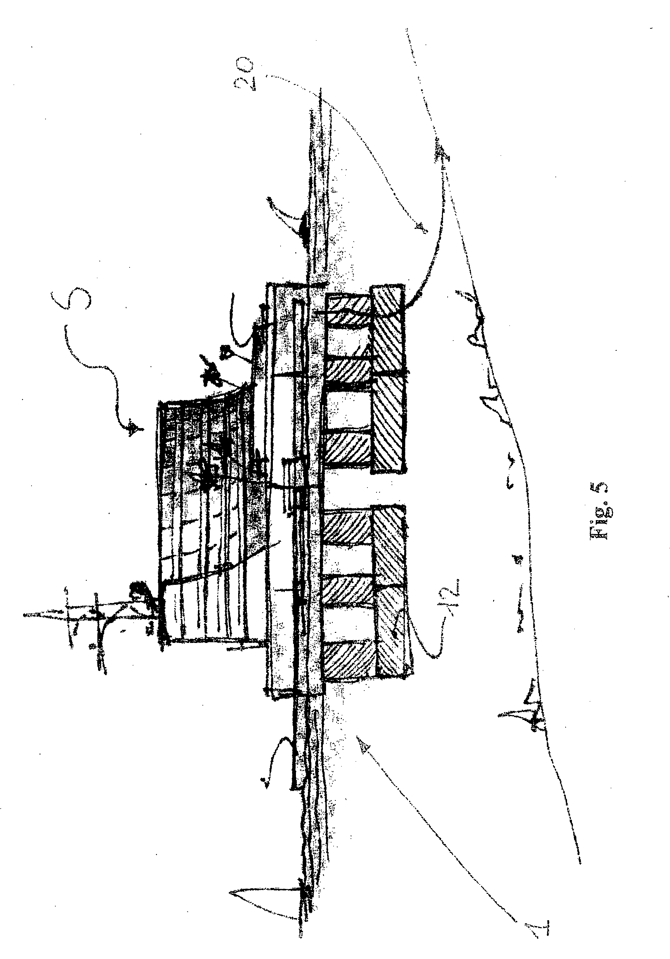

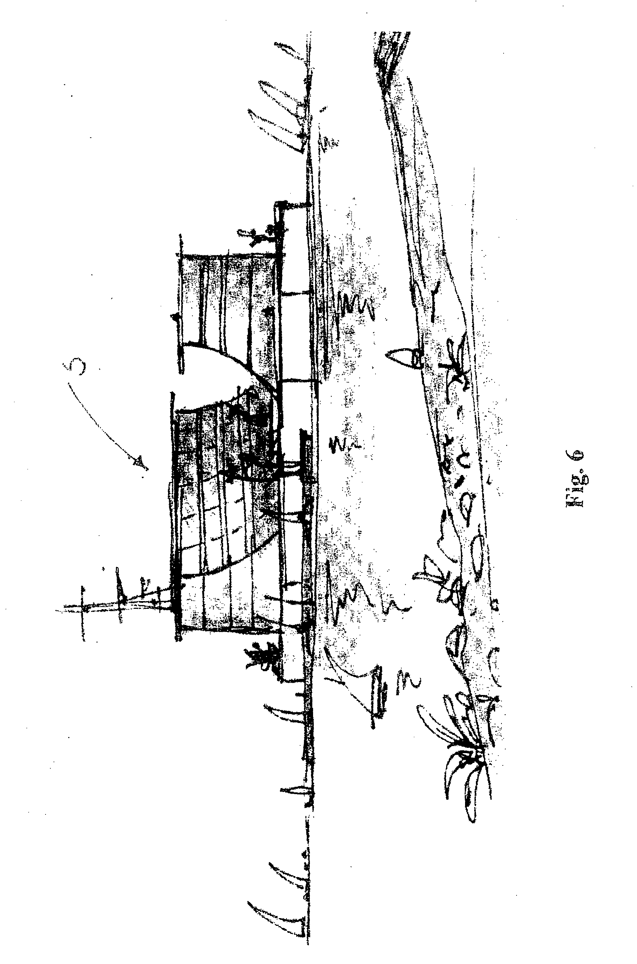

The modular semi-submersible structure 1 comprises a platform 2 on which tourism, residential, commercial, industrial or military structures S of great weight and size may be boarded in the vicinity of coasts or in lake or river waters as well as in unprotected, off-coast areas, as illustrated for example in Figures 5, 6,7 and 8.

The structures which may be made on the platform 2 may be of any kind, such as hotel, recreational, cultural, sports, industrial, military, oil & gas, conventional energy production, renewable energy production, waste treatment, signalling, environmental monitoring, processing, airport, naval craft support, storage etc.

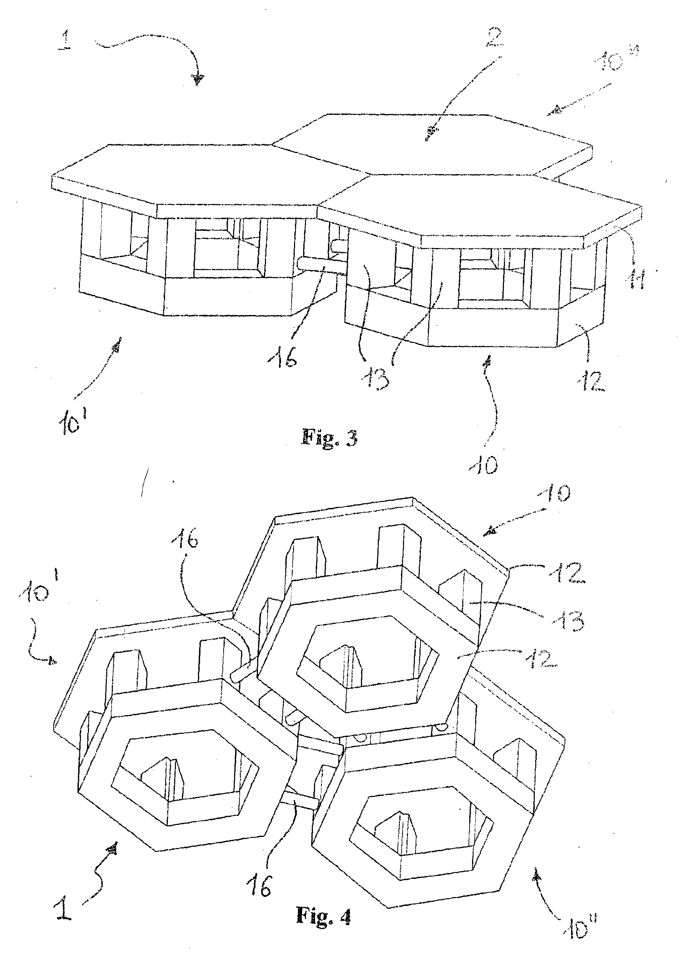

The semi-submersible structure 1 comprises two or more semi-submersible modules 10, 10', 10" connected to each other structurally, as shown in Figures 3 and 4.

Each module 10, 10', 10" comprises:
- a deck 11, which in conditions of use is emerged and defines a portion of the platform 2;
- a hull 12, which is positioned under the deck, is provided internally with first watertight compartments having a ballast function and in conditions of use is submerged; and
- a plurality of columns 13 which structurally connect the hull 12 to the deck 11 and have inside them second watertight compartments 15 having a ballast function.

The semi-submersible structure 1 comprises arms 16 which structurally connect adjacent semi-submersible modules 10, 10', 10" to each other, as shown in Figures 3 and 4.

Preferably, the deck 11 of each module 10 has a polygonal-shaped perimeter. Operatively, the decks 11 of adjacent modules 10, 10', 10" are positioned alongside each other at their perimetral sides forming a continuous structure which defines the platform 2 of the semi-submersible structure 1.

According to a preferred embodiment shown in the appended drawings the deck of a module has a regular polygonal-shaped, and preferably hexagonal-shaped perimeter. In fact the hexagonal shape allows improved filling of the total useful surface and greater distribution of the stresses.

According to the preferred embodiment shown in Figures 3 and 4, the arms 16 structurally connect adjacent modules 10, 10', 10" to each other at their respective columns 13.

Preferably, the connection arms 16 are welded to the columns 13. In particular, the connection between an arm and a column is made by an interlocking connection.

The connection arms 16 preferably have a circular cross-section, in that this offers greater mechanical resistance to the stresses. Other cross-sections, such as polygonal, in particular square or rectangular, may also be envisaged.

Advantageously, the adjacent modules 10, 10', 10" are also structurally connected to each other at their respective decks 11. Preferably in this case, the arms are connected to the columns 13 near the points where the columns are connected to the hull, that is as far as possible from the deck, so as to have a better distribution of the stresses and reduce the portions of the structure subject to mechanically imbalanced stresses.

In particular, the deck 11 of a module 10 has a box-like structure comprising at least two sheet-shaped elements, upper and lower, placed one above the other, and a plurality of interconnection beams positioned between the two sheet-shaped elements. The decks 11 of two adjacent modules are structurally connected to each other both at the respective sheet-shaped elements and at the interconnection beams.

The structural connection between the parts may in particular be made by welding.

Preferably, the interconnection beams 17 of the deck 11 of a module are positioned according to a right-angled grid.

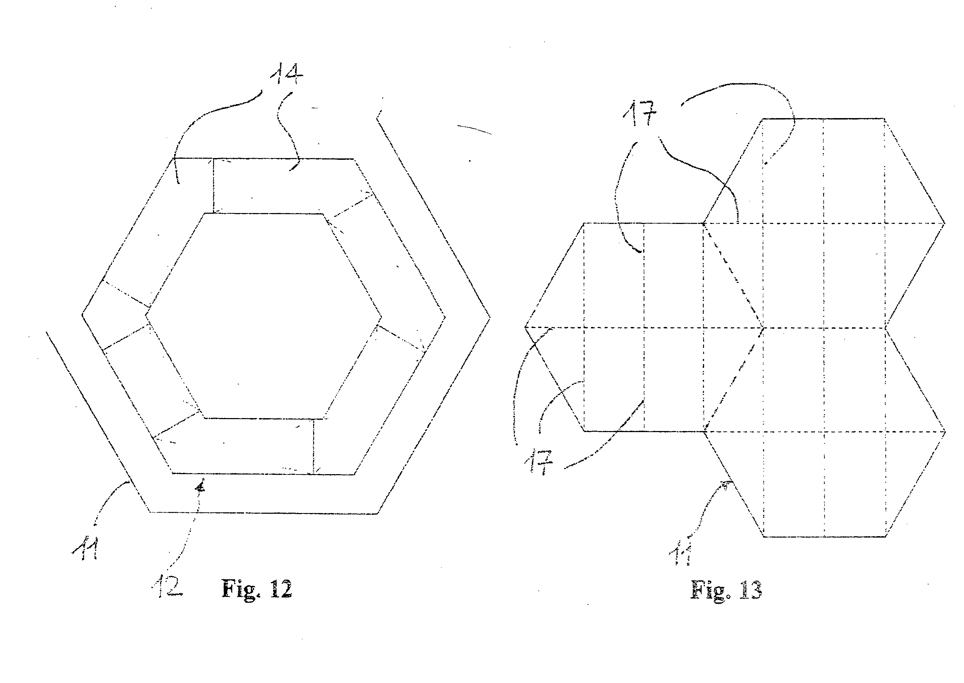

According to a preferred embodiment shown in Figure 13, the deck 11 of each module has a regular polygonal-shaped (in particular hexagonal) perimeter and the interconnection beams positioned according to the aforesaid right-angled grid pass through the corners of the polygonal perimeter. The modules 10, 10' and 10" are positioned in relation to one another with the respective interconnection beams connected to each other at the corners of the polygonal perimeter of the decks to form a single right-angled grid. This configuration simplifies the realisation of the joint and offers substantially isotropic behaviour.

According to an alternative embodiment (not shown in the appended drawings), the interconnection beams of the deck 11 of a module 10 are positioned according to radial pattern from the centre of the deck.

Preferably, as illustrated in the appended Figures, the hull 12 of each module is a single, annular-shaped body, inside which the aforementioned first watertight compartments 14 are made.

Alternatively, according to an embodiment not shown, the hull may be made from separate floating units, each connected to the deck by at least one column.

The annular shape of the hull is preferred in that it permits better balancing of the masses, maximises the thrust provided by the watertight compartments, permits a reduction of the weight and lends the hull and entire module greater rigidity and mechanical resistance to the stresses.

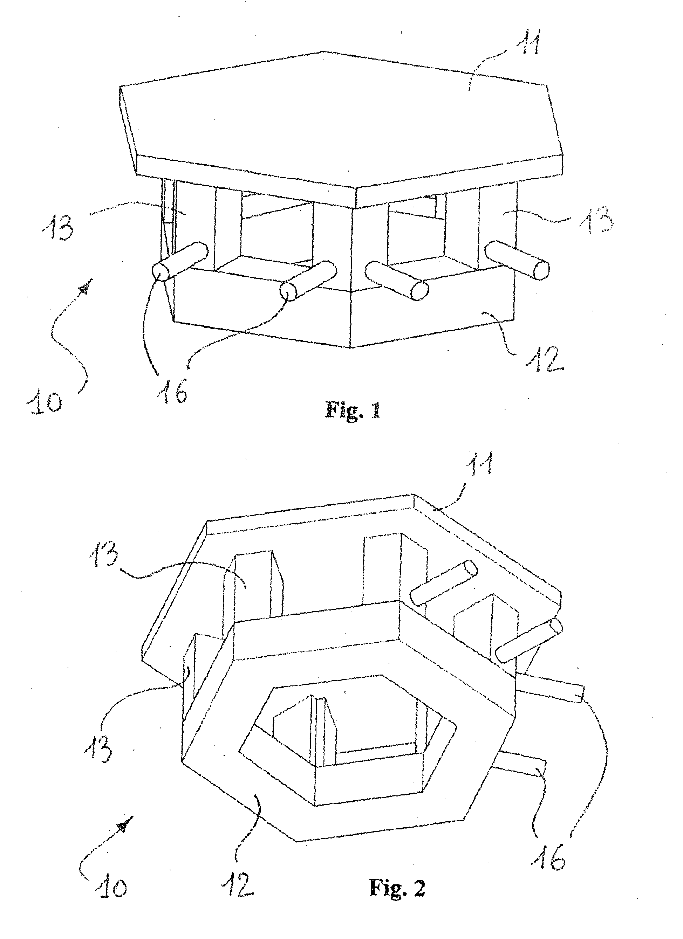

As illustrated in particular in figure 2, the hull 12 has a smaller plan dimensions than the deck 11, to allow the construction of the semi-submersible module even in docks of limited size as well as the positioning of the connection arms 16 between the columns 13.

In particular, the annular shaped hull 12 has a plan cross-section of a polygonal shape, preferably corresponding to that of the deck 11. Preferably, the hull has a rectangular transversal cross-section, even though cross-sections of a different shape may be envisaged.

Advantageously, the columns 13 are box-like elements having a transversal cross-section preferably of a polygonal or circular shape.

Inside the columns the aforementioned second watertight compartments 15, which preferably occupy only a part of the inner volume of said columns, are made. Part of the inner volume of the columns may be used for utility spaces for operative use.

Preferably, the columns 13 are vertical to ensure a better distribution of the stresses. In the case of an annular hull with a polygonal cross-section in plan (as shown in Figure 1 and 2), the columns 13 are erected in the vertex area of the polygon in plan of the hull 12.

Preferably, all the components of a module are made as bodies sealed tight to the marine environment and weather. In particular, the box-like structure which forms the deck 11 of a module is closed laterally by means of closure sheets which connect the two plate-shaped elements, upper and lower. Such plates are not present in the perimetral portions where the deck is connected to adjacent modules.

For example, a semi-submersible module 10 used to make the semi-submersible structure 1 according to the invention has a hexagonal deck with sides approximately 29 m long, distance between two parallel sides of approximately 50 m and distance between two vertexes of approximately 58 m. The deck is approximately 2.5 m high. The useful surface is approximately 2,100 m². The hull is annular with a hexagonal layout (side approx. 23 m, distance between parallel sides of approx. 40 m) and a square transversal cross-section (height and width 7 m). There are 6 columns, one for each vertex; they are approx. 12 m high. There are 6 first watertight compartments (in the hull), for a total volume of approx. 4,900 m³; there are 6 second watertight compartments (in the columns), for a total volume of approx. 1,500 m³; the mass is estimated at about 2000 t. The module described above can be made in sites of medium logistic and installation potential.

Preferably, each module comprises a ballasting system with water of the first 14 and of the second watertight compartments 15.

In particular, the ballasting system comprises one or more pumps for moving the water and a network of pumping pipes connected to the first and second watertight compartments 14 and 15. Preferably, each compartment is served by an independent pipe. The energy needed for the emptying or filling operations of the compartments is assured by an electric generator system installed on board.

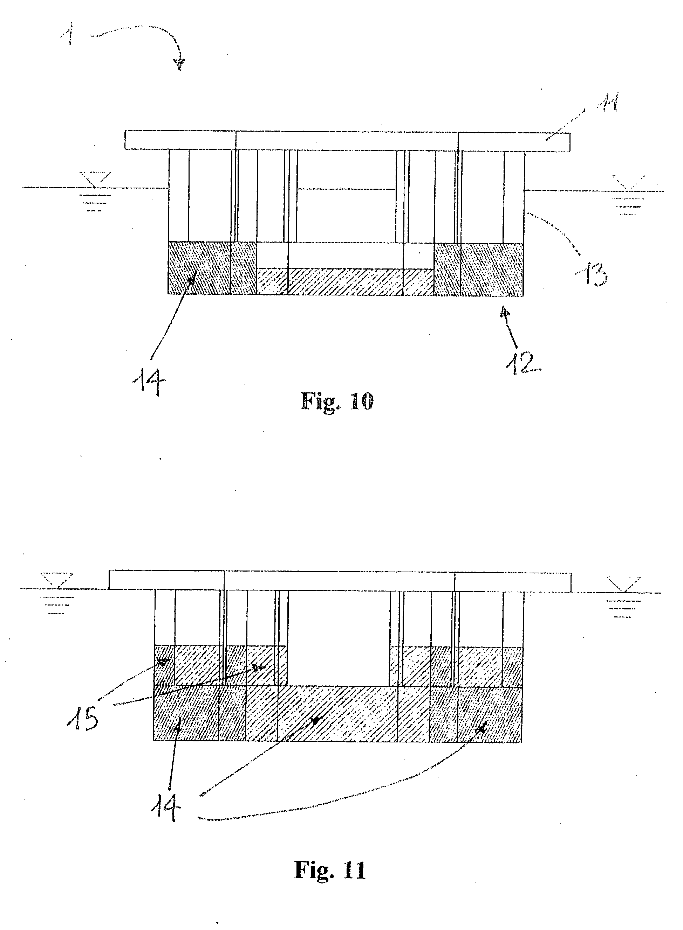

Operatively, the ballasting system can be used to vary the level of water filling the watertight compartments and therefore to vary the waterline of the module (10, 10', 10"). The filling of the second watertight compartments 15 (i.e. those positioned in the columns) in addition to the first compartments 14 (i.e. those positioned in the hull) brings the waterline closer to the deck and therefore leads to a greater submersion of the module in water (see Figure 11). The emptying of the compartments starting with the second compartments 15 brings the waterline further away from the deck and therefore leads to a lesser submersion of the module in water (see Figure 10).

As will be explained below, the ability to vary the waterline of the individual semi-submersible module simplifies the operations of connecting the individual modules to each other in the sea during the construction phase of the semi-submersible structure 1. It is in fact possible to bring the waterline close to the hull so as to have the columns surfacing and perform the connection of the arms in emersion, avoiding the technical difficulties of underwater welding.

Preferably, the semi-submersible structure 1 is provided with a centralised control system (not shown in the appended Figures) which controls the ballasting systems of the individual modules to ensure balanced filling and emptying of the watertight compartments of the modules and therefore balanced floating of the semi-submersible structure 1. In particular the filling and emptying of the compartments take place in controlled sequences.

The possibility of varying the waterline of the entire modular semi-submersible structure 1 makes it possible to adapt the structure itself to the conditions of the sea.

In the case of normal or good weather-sea conditions, or in any case not putting the structures made on the platform 2 at risk, the semi-submersible structure 1 may be submerged almost as far as the platform 2. This way the part of the structure emerged is reduced with advantages in terms of environmental impact and effect on the landscape and the structures made on the platform 2 can be brought closer to the level of the sea with advantages in terms of use of the sea itself.

In the case of adverse weather or sea conditions, or in any case putting the structures made on the platform 2 at risk, the semi-submersible structure 1 may be made to surface, raising the platform from sea level and making the columns surface at least partially.

In the configuration with the waterline near the hull, the entire semi-submersible structure 1 can be moved by its own means of propulsion or towed.

Advantageously, the semi-submersible structure 1 may comprise one or more propulsion units (not shown in the appended Figures) fixed or detachable, to move the structure in water.

Advantageously, the semi-submersible structure 1comprises a mooring system to the seabed, comprising one or more mooring lines 20 which are retained on the seabed by anchors, posts or dead weights.

Preferably, each module 10, 10', 10" has its own mooring system.

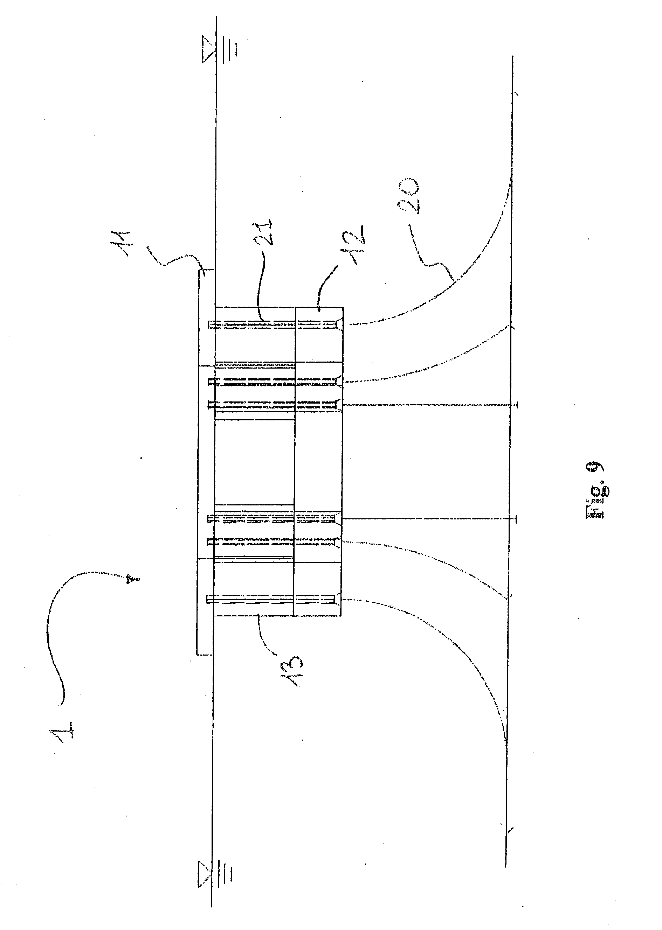

More in detail, as illustrated in Figure 9, a mooring system comprises a guide pipe 21 for each mooring line which is positioned inside a connection column 13 and traverses the hull 12, and equipment for moving/hoisting the mooring line, consisting for example of a chain.

The present invention relates to a method for making the modular semi-submersible structure 1 described above.

In its more general form of implementation such method comprises the following operating steps:
. a) separately launching a predefined number of semi-submersible modules 10, 10',10";
. b) bringing the waterline of each module close to the hull 12 so as to keep the columns substantially emerged, acting on the filling level of the first and second watertight compartments 14 and 15;
. b) positioning the semi-submersible modules already launched with the columns substantially emerged alongside each other at the relative decks;
. c) connecting the modules to each other to form a single structure, by connecting the columns of one module to the columns of the adjacent modules by means of the connection arms, which are connected to the emerged portions of the columns.

In particular, the connection arms are connected to the columns by welding.

The method may comprise a step d) of structurally connecting the decks of adjacent modules to each other.

Preferably, the construction of the individual module is performed entirely on land or in dock and then made to float with launching operations. The overall semi-submersible structure is built with operations at sea on the basis of an identified procedure and subsequently provided using naval craft. The number of modules for the overall semi-submersible structure is defined once the logistic area and useful surface requirements have been allocated.

The present invention enables numerous advantages to be achieved, some of which mentioned above.

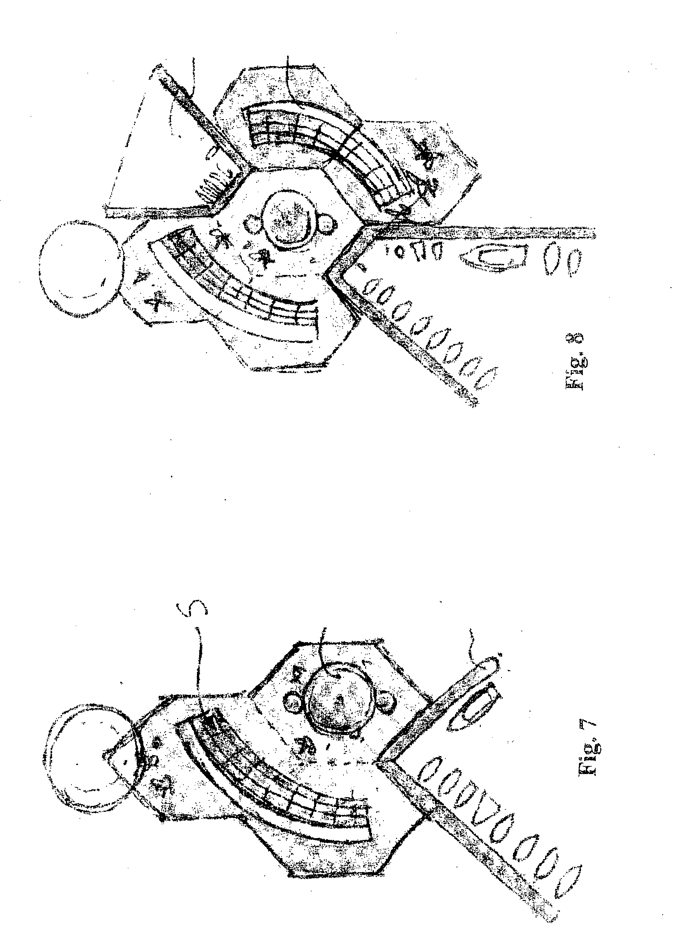

Thanks to the modular type structure, the semi-submersible structure 1 according to the invention may be easily adapted to space and capacity project requirements. The utilisable surface is easily expandable in relation to the project requirements of space and capacity which may evolve and change over time, as may be observed comparing figures 7 and 8 relative to a structure 1 extended with the addition of two new modules to those existing. Moreover "refitting" operations of the structure itself with a change in the number of modules and reuse of the same are possible.

The modular semi-submersible structure 1 according to the invention constitutes a solution capable of satisfying varied needs for multipurpose use especially in the tourism, energy and logistics sectors, both in port environments and near coasts, even in unprotected areas. The structure 1 can also operate in off-coast, unprotected areas of water.

Thanks to the possibility of varying the waterline and therefore degree of submersion, the modular semi-submersible structure 1 can be placed in the marine environment with the least possible impact and can withstand adverse sea conditions, raising the platform with floating on the columns. The structure 1 is therefore able to ensure a high degree of comfort and safety on board even in adverse sea conditions.

The possibility of varying the waterline facilitates the connection of the various modules, avoiding the need for underwater welding operations.

The modular semi-submersible structure can be easily and.simply made directly in the final mooring area.

The invention thus conceived thereby achieves the intended objectives.

Obviously, it may assume, in its practical embodiments, forms and configurations different from those illustrated above while remaining within the present sphere of protection.

Furthermore, all the parts may be replaced with technically equivalent parts and the dimensions, shapes and materials used may be varied as required.

## Claims

1. Modular semi-submersible structure, comprising a platform for boarding tourism, residential, commercial, industrial or military structures in the vicinity of coasts or in lake or river waters as well as in unprotected, off-coast areas, comprising two or more semi-submersible modules (10, 10', 10") connected to each other, each module (10) comprising:
- a deck (11) which in conditions of use is emerged and defines a portion of said platform;
- a hull (12), which is positioned under the deck, is provided internally with first watertight compartments having a ballast function and in conditions of use is submerged; and
- a plurality of columns (13) which structurally connect the hull (12) to the deck (11) and have inside them second watertight compartments (15) having a ballast function, the semi-submersible structure (1) comprises arms (16) which structurally connect adjacent semi-submersible modules (10, 10', 10") to each other, wherein the arms (16) structurally connect adjacent modules (10, 10', 10") to each other at their respective columns (13).

2. Semi-submersible structure according to claim 1, wherein the deck has a polygonal-shaped perimeter, preferably hexagonal, the decks of adjacent modules (10, 10', 10") being positioned alongside each other on their perimetral sides forming a continuous structure.

3. Semi-submersible structure according to claim 1 or 2, wherein the adjacent modules are structurally connected to each other at their respective decks.

4. Semi-submersible structure according to claim 3, wherein the deck (11) has a box-like structure comprising at least two sheet-shaped elements, upper and lower, placed one above the other, and a plurality of interconnection beams positioned between the two sheet-shaped elements, the decks of two adjacent modules being structurally connected to each other at the respective sheet-shaped elements and at the interconnection beams.

5. Semi-submersible structure according to claim 4, wherein the interconnection beams of the deck of a module are positioned according to a right-angled grid.

6. Semi-submersible structure according to claim 5, wherein the deck of each module has a regular polygonal-shaped perimeter and said right-angled grid passes through the corners of the polygonal perimeter, the modules being positioned in relation to one another with the respective interconnection beams connected to each other at the corners of the polygonal perimeter of the decks to form a single right-angled grid.

7. Semi-submersible structure according to claim 1, wherein the connection arms (16) are welded to the columns (13) .

8. Semi-submersible structure according to claim 1 or 7, wherein the connection arms (16) have a circular cross-section.

9. Semi-submersible structure according to one or more of the previous claims, wherein the hull (12) is a single body of an annular shape.

10. Semi-submersible structure according to claim 9, wherein the hull (12) has smaller plan dimensions than the deck (11).

11. Semi-submersible structure according to one or more of the previous claims, wherein the columns (13) have a transversal cross-section of a polygonal shape.

12. Semi-submersible structure according to one or more of the previous claims, wherein each module comprises a ballasting system with water of the first and of the second watertight compartments, said system being utilisable to vary the level of water filling such watertight compartments and therefore to vary the waterline of the module (10, 10', 10").

13. Semi-submersible structure according to claim 12, wherein said ballasting system comprises one or more pumps for moving the water and a network of pumping pipes connected to said first and second watertight compartments (14, 15), the semi-submersible structure (1) having a centralised control system which controls the ballasting systems of the individual modules to ensure balanced filling and emptying of the watertight compartments of the modules and therefore balanced floating of the semi-submersible structure (1).

14. Semi-submersible structure according to one or more of the previous claims, comprising a mooring system to the seabed, preferably one for each module (10, 10', 10").

15. Semi-submersible structure according to claim 14, wherein said mooring system comprises one or more mooring lines, each mooring line having a guide pipe, which is positioned inside a connection column (13) and traverses the hull (12), and a movement apparatus.

16. Semi-submersible structure according to one or more of the previous claims, comprising one or more propulsion units, fixed or detachable, to move the structure in water.

17. Method of making a semi-submersible structure according to one or more of the previous claims, wherein said structure comprises a platform for boarding tourism, residential, commercial, industrial or military structures in the vicinity of coasts or in lake or river waters as well as in unprotected, off-coast areas, and comprises two or more semi-submersible modules (10, 10', 10") connected to each other, in turn each module (10) comprising: - a deck (11) which in conditions of use is emerged and defines a portion of said platform; - a hull (12), which is positioned under the deck, is provided internally with first watertight compartments having a ballast function and in conditions of use is submerged; and - a plurality of columns (13) which structurally connect the hull (12) to the deck (11) and have inside them second watertight compartments having a ballast function, said method comprising the following operating steps:
a) separately launching a predefined number of semi-submersible modules (10, 10',10");
b) bringing the waterline of each module close to the hull (12) so as to keep the columns substantially emerged, acting on the filling level of the first and second watertight compartments;
c) positioning the semi-submersible modules already launched, with the columns substantially emerged, alongside each other at the relative decks;
d) connecting the modules to each other to form a single structure, by connecting the columns of one module to the columns of the adjacent modules by means of connection arms, said arms being connected to the emerged portions of the columns.

18. Method according to claim 17, wherein in said connection step d) the connection arms are connected to the columns by welding.

19. Method according to claim 17 or 18, comprising a step e) of structurally connecting the decks of adjacent modules to each other.

## Patentansprüche

1. Modulare halbtauchfähige Struktur, umfassend eine Plattform zum Besteigen von zu touristischen, gewerblichen, industriellen, militärischen oder Wohnungszwecken dienenden Strukturen in der Nähe von Küsten oder in Gewässern von Seen oder Flüssen und in ungeschützten offshore Gebieten, umfassend zwei oder mehrere miteinander verbundene halbtauchfähige Module (10, 10', 10''), wobei jedes Modul (10) umfasst:
- ein Deck (11), welches im Einsatz über Wasser liegt und einen Teil der Plattform darstellt;
- einen Rumpf (12), der unter dem Deck positioniert ist und in dessen Inneren erste wasserdichte Abteilungen vorgesehen sind, die eine Ballastfunktion erfüllen und im Einsatz unter Wasser liegen ; und
- eine Mehrzahl von Säulen (13), die den Rumpf (12) strukturell mit dem Deck (11) verbinden und im Inneren zweite wasserdichte Abteilungen (15) aufweisen, die eine Ballastfunktion erfüllen, wobei
die halbtauchfähige Struktur (1) Arme (16) umfasst, die benachbarte halbtauchfähige Module (10, 10', 10'') strukturell miteinander verbinden, wobei die Arme (16) benachbarte Module (10, 10', 10'') an deren jeweiligen Säulen (13) strukturell miteinander verbinden.

2. Halbtauchfähige Struktur nach Anspruch 1, wobei das Deck einen polygonalen, vorzugsweise hexagonalen, Umfang aufweist, wobei die Decks benachbarter Module (10, 10', 10") an ihren umfänglichen Seiten längsseits aneinander positioniert sind, so dass sie eine durchgehende Struktur bilden.

3. Halbtauchfähige Struktur nach Anspruch 1 oder 2, wobei die benachbarten Module an ihren jeweiligen Decks strukturell miteinander verbunden sind.

4. Halbtauchfähige Struktur nach Anspruch 3, wobei das Deck (11) eine kastenartige Struktur aufweist, die mindestens zwei, jeweils oben und unten übereinander angeordnete plattenförmige Elemente umfasst sowie eine Mehrzahl von Verbindungsbalken, die zwischen den zwei plattenförmigen Elementen positioniert sind, wobei die Decks zweier benachbarter Module an ihren jeweiligen plattenförmigen Elementen und an den Verbindungsbalken strukturell miteinander verbunden sind.

5. Halbtauchfähige Struktur nach Anspruch 4, wobei die Verbindungsbalken des Decks eines Moduls einem rechtwinkligen Raster entsprechend positioniert sind.

6. Halbtauchfähige Struktur nach Anspruch 5, wobei das Deck jedes Moduls einen regelmäßig polygonalen Umfang aufweist, und das rechtwinklige Raster durch die Ecken des polygonalen Umfangs hindurchführt, wobei die Module derart relativ zueinander positioniert sind, dass die jeweiligen Verbindungsbalken an den Ecken des polygonalen Umfangs der Decks miteinander verbunden sind und somit ein einziges rechtwinkliges Raster bilden.

7. Halbtauchfähige Struktur nach Anspruch 1, wobei die Verbindungsarme (16) an den Säulen (13) angeschweißt sind.

8. Halbtauchfähige Struktur nach Anspruch 1 oder 7, wobei die Verbindungsarme (16) einen kreisförmigen Querschnitt aufweisen.

9. Halbtauchfähige Struktur nach einem oder mehreren der vorhergehenden Ansprüche, wobei der Rumpf (12) einen einzigen ringförmigen Körper darstellt.

10. Halbtauchfähige Struktur nach Anspruch 9, wobei der Rumpf (12) kleinere Grundrissabmessungen als das Deck (11) aufweist.

11. Halbtauchfähige Struktur nach einem oder mehreren der vorhergehenden Ansprüche, wobei die Säulen (13) einen polygonalen Querschnitt aufweisen.

12. Halbtauchfähige Struktur nach einem oder mehreren der vorhergehenden Ansprüche, wobei jedes Modul ein Ballastierungssystem mit Wasser aus der ersten und der zweiten wasserdichten Abteilungen umfasst, wobei das System zur Veränderung des Wasserfüllstandes solcher wasserdichter Abteilungen und somit zur Veränderung der Wasserlinie des Moduls (10, 10', 10") verwendbar ist.

13. Halbtauchfähige Struktur nach Anspruch 12, wobei das Ballastierungssystem eine oder mehrere Pumpen zum Bewegen des Wassers und ein Netzwerk von mit den ersten und zweiten wasserdichten Abteilungen (14, 15) verbundenen Pumpleitungen umfasst, wobei die halbtauchfähige Struktur (1) ein zentrales Regel-/Steuerungssystem aufweist, welches das Ballastierungssystem der einzelnen Module steuert, um ein ausgewogenes Füllen und Entleeren der wasserdichten Abteilungen der Module und somit ein ausgewogenes Aufschwimmen der halbtauchfähigen Struktur (1) zu gewährleisten.

14. Halbtauchfähige Struktur nach einem oder mehreren der vorhergehenden Ansprüche umfassend ein System zur Verankerung am Meeresboden, vorzugsweise jeweils ein System für jedes Modul (10, 10', 10").

15. Halbtauchfähige Struktur nach Anspruch 14, wobei das Verankerungssystem einen oder mehrere Festmacher umfasst, wobei jeder Festmacher ein Führungsrohr aufweist, welches sich innerhalb einer Verbindungssäule (13) befindet und durch den Rumpf (12) hindurchführt, sowie ein Bewegungsgerät umfasst.

16. Halbtauchfähige Struktur nach einem oder mehreren der vorhergehenden Ansprüche, welche zur Bewegung der Struktur im Wasser eine oder mehrere, fest verbundene oder abnehmbare Antriebseinheiten umfasst.

17. Verfahren zur Herstellung einer halbtauchfähigen Struktur nach einem oder mehreren der vorhergehenden Ansprüche, wobei die Struktur eine Plattform zum Besteigen von zu touristischen, gewerblichen, industriellen, militärischen oder Wohnungszwecken dienenden Strukturen in der Nähe von Küsten oder in Gewässern von Seen oder Flüssen und in ungeschützten offshore Gebieten umfasst und zwei oder mehrere miteinander verbundene halbtauchfähige Module (10, 10', 10'') umfasst, wobei jedes Modul (10) wiederum umfasst: - ein Deck (11), welches im Einsatz über Wasser liegt und einen Teil der Plattform darstellt; - einen Rumpf (12), der unter dem Deck positioniert ist und in dessen Inneren erste wasserdichte Abteilungen vorgesehen sind, die eine Ballastfunktion erfüllen und im Einsatz unter Wasser liegen ; und - eine Mehrzahl von Säulen (13), die den Rumpf (12) strukturell mit dem Deck (11) verbinden und im Inneren zweite wasserdichte Abteilungen aufweisen, die eine Ballastfunktion erfüllen, wobei das Verfahren die folgenden Bedienschritte umfasst:
a) separates Zuwasserlassen einer vorbestimmten Anzahl halbtauchfähiger Module (10, 10', 10");
b) Annähern der Wasserlinie jedes Moduls an den Rumpf (12), um die Säulen im Wesentlichen über Wasser zu halten, indem auf den Füllstand der ersten und zweiten wasserdichten Abteilungen eingewirkt wird;
c) Positionieren der bereits zu Wasser gelassenen halbtauchfähigen Module, deren Säulen im Wesentlichen über Wasser liegen, längsseits aneinander an ihren jeweiligen Decks;
d) Verbinden der Module aneinander zur Bildung einer einzelnen Struktur, indem die Säulen eines Moduls mit den Säulen benachbarter Module anhand von Verbindungsarmen miteinander verbunden werden, wobei die Arme mit den über Wasser liegenden Abschnitten der Säulen verbunden sind.

18. Verfahren nach Anspruch 17, wobei im Verbindungsschritt d) die Verbindungsarme durch Schweißen mit den Säulen verbunden sind.

19. Verfahren nach Anspruch 17 oder 18, umfassend einen Schritt e) bei dem die Decks benachbarter Module strukturell miteinander verbunden werden.

## Revendications

1. Structure semi-submersible modulaire, comprenant une plate-forme pour l'embarquement de structures touristiques, résidentielles, commerciales, industrielles ou militaires à proximité de côtes ou dans des eaux de lacs ou de rivières ainsi que dans des zones non protégées au large des côtes, comprenant deux modules semi-submersibles ou plus (10, 10', 10") reliés les uns aux autres, chaque module (10) comprenant :
- un pont (11) qui, en conditions d'utilisation, est émergé et définit une partie de ladite plate-forme ;
- une coque (12), positionnée sous le pont, qui est dotée à l'intérieur de premiers compartiments étanches à l'eau ayant une fonction de ballast et est submergée en conditions d'utilisation ; et
- une pluralité de colonnes (13) qui relient structurellement la coque (12) au pont (11) et ont à l'intérieur d'elles des seconds compartiments étanches à l'eau (15) ayant une fonction de ballast, la structure semi-submersible (1) comprend des bras (16) qui relient structurellement les modules semi-submersibles adjacents (10, 10', 10'') les uns aux autres, les bras (16) reliant structurellement les modules adjacents (10, 10', 10") les uns aux autres au niveau de leurs colonnes respectives (13).

2. Structure semi-submersible selon la revendication 1, dans laquelle le pont a un périmètre de forme polygonale, de préférence hexagonale, les ponts des modules adjacents (10, 10', 10'') étant positionnés les uns à côté des autres sur leurs faces périmétriques, formant une structure continue.

3. Structure semi-submersible selon la revendication 1 ou 2, dans laquelle les modules adjacents sont reliés structurellement les uns aux autres au niveau de leurs ponts respectifs.

4. Structure semi-submersible selon la revendication 3, dans laquelle le pont (11) a une structure de type boîte comprenant au moins deux éléments en forme de feuille, supérieur et inférieur, placés l'un au-dessus de l'autre, et une pluralité de poutres d'inter-connexion positionnées entre les deux éléments en forme de feuilles, les ponts des deux modules adjacents étant structurellement reliés les uns aux autres au niveau des éléments en forme de feuille respectifs et au niveau des poutres d'interconnexion.

5. Structure semi-submersible selon la revendication 4, dans laquelle les poutres d'interconnexion du pont d'un module sont positionnées en fonction d'une grille à angle droit.

6. Structure semi-submersible selon la revendication 5, dans laquelle le pont de chaque module a un péri-mètre de forme polygonale régulière et ladite grille à angle droit passe à travers les coins du périmètre polygonal, les modules étant positionnés les uns par rapport aux autres avec les poutres d'interconnexion respectives reliées les unes aux autres au niveau des coins du périmètre polygonal des ponts pour former une grille à angle droit unique.

7. Structure semi-submersible selon la revendication 1, dans laquelle les bras de liaison (16) sont soudés aux colonnes (13).

8. Structure semi-submersible selon la revendication 1 ou 7, dans laquelle les bras de liaison (16) ont une section transversale circulaire.

9. Structure semi-submersible selon une ou plusieurs des revendications précédentes, dans laquelle la coque (12) est un corps unique de forme annulaire.

10. Structure semi-submersible selon la revendication 9, dans laquelle la coque (12) présente des dimensions en plan plus petites que le pont (11).

11. Structure semi-submersible selon une ou plusieurs des revendications précédentes, dans laquelle les colonnes (13) ont une section transversale de forme polygonale.

12. Structure semi-submersible selon une ou plusieurs des revendications précédentes, dans laquelle chaque module comprend un système de ballastage avec l'eau des premier et second compartiments étanches à l'eau, ledit système étant utilisable pour faire varier le niveau de l'eau remplissant ces compartiments étanches à l'eau et faire varier en conséquence la ligne de flottaison du module (10, 10', 10").

13. Structure semi-submersible selon la revendication 12, dans laquelle ledit système de ballastage comprend une ou plusieurs pompes pour déplacer l'eau et un réseau de tubes de pompage raccordés auxdits premier et second compartiments étanches à l'eau (14, 15), la structure semi-submersible (1) ayant un système de com-mande centralisé qui commande les systèmes de ballas-tage des modules individuels pour garantir un remplissage et un vidage équilibré des compartiments étanches à l'eau des modules et en conséquence, un flottement équilibré de la structure semi-submersible (1).

14. Structure semi-submersible selon une ou plusieurs des revendications précédentes, comprenant un système d'amarrage au fond marin, de préférence un pour chaque module (10, 10', 10").

15. Structure semi-submersible selon la revendication 14, dans laquelle ledit système d'amarrage comprend une ou plusieurs amarres, chaque amarre comportant un tube de guidage, qui est positionné à l'intérieur de la colonne de liaison (13) et traverse la coque (12), et un appareil de déplacement.

16. Structure semi-submersible selon une ou plusieurs des revendications précédentes, comprenant une ou plusieurs unités de propulsion, fixes ou détachables, pour déplacer la structure dans l'eau.

17. Méthode de fabrication d'une structure semi-submersible selon une ou plusieurs des revendications précédentes, dans laquelle ladite structure comprend une plate-forme pour l'embarquement de structures touristiques, résidentielles, commerciales, industrielles ou militaires à proximité de côtes ou dans les eaux de lacs ou de rivières ainsi que dans des zones non protégées au large des côtes, et comprend deux modules semi-submersibles ou plus (10, 10', 10") reliés les uns aux autres, chaque module (10) comprenant tour à tour : - un pont (11) qui, en conditions d'utilisation est émergé et définit une partie de ladite plate-forme ; - une coque (12), positionnée sous le pont, qui est dotée à l'intérieur de premiers compartiments étanches à l'eau ayant une fonction de ballast et est submergée en conditions d'utilisation ; et - une pluralité de colonnes (13) qui relient structurellement la coque (12) au pont (11) et ont à l'intérieur d'elles des seconds compartiments étanches à l'eau (15) ayant une fonction de ballast, ladite méthode comprenant les étapes opérationnelles suivantes :
a) le lancement séparé d'un nombre prédéfini de modules semi-submersibles (10, 10', 10");
b) l'amenée de la ligne de flottaison de chaque module près de la coque (12) de manière à maintenir les colonnes sensiblement émergées, agissant sur le niveau de remplissage des premier et second compartiments étanches à l'eau ;
c) le positionnement des modules semi-submersibles déjà lancés, avec les colonnes sensiblement émergées, les uns à côté des autres au niveau des ponts relatifs ;
d) la liaison des modules les uns aux autres pour former une seule structure, en reliant les colonnes d'un module aux colonnes des modules adjacents au moyen de bras de liaison, lesdits bras étant reliés aux parties émergées des colonnes.

18. Méthode selon la revendication 17, dans laquelle, dans ladite étape de liaison d) les bras de liaison sont reliés aux colonnes par soudage.

19. Méthode selon la revendication 17 ou 18, comprenant une étape e) de liaison structurelle des ponts de modules adjacents les uns aux autres.
